# EUROPEAN PATENT APPLICATION

(11) **EP 2 632 119 A1**
(43) Date of publication of application: **28.08.2013**
(21) Application number: 12290066.5
(22) Date of filing: 27.02.2012
(51) Int. Cl.: H04M 1/02, H04M 1/2745, H04M 1/725

(54) **Two-mode access linear UI**

(71) Applicant: Doro AB, 226 43 Lund (SE)
(72) Inventor: Bergdahl, Thomas, 226 43 Lund (SE); Cullin, Peter, 245 44 Straffanstorp (SE); Cammarata, Yves, 75011 Paris (FR); Benktzon, Maria, 120 66 Stockholm (SE); Harmanen, Theresa, 16447 Kista (SE); Bendt, Ololf, 128 39 Skarpnäck (SE)
(74) Representative: Ström & Gulliksson AB

(57) **Abstract**

A mobile telecommunication terminal (200) is disclosed. The terminal has a two-part apparatus housing (201) having a first housing part (201a) movably coupled to a second housing part (201b), the first housing part comprising a touch screen (203) and the second housing part comprising a keypad (270). The mobile telecommunication terminal is operable in a first mode where the first and second housing parts assume a first position relative to each other, and in a second mode where the first and second housing parts assume a second position relative to each other. A controller (300) is configured to provide a graphical user interface (334) on the touch screen. The graphical user interface simultaneously provides a plurality of selectable icons or buttons representing respective functions of the mobile telecommunication terminal. The plurality of selectable icons (251 a-d) is provided as a linearly ordered list (250) on the touch screen (203). The apparatus housing (201) has a permanently accessible actuator set (260) for linear navigation and selection in the linearly ordered list (250) of selectable icons. The graphical user interface is configured such that the icons of the linearly ordered list (250) can be navigated and selected both by using the touch screen (203) and by using the actuator set (260) in the first mode as well as in the second mode.

## Description

### Technical Field

The present invention generally relates to the field of mobile telecommunication, and more particularly to a mobile telecommunication terminal comprising a two-part apparatus housing having first and second housing parts which are movably coupled to each other to allow operation in a first mode, with the housing parts in a first position relative to each other, and in a second mode, with the housing parts in a second position relative to each other, the first housing part comprising a touch screen and the second housing part comprising a keypad, and a controller configured to provide a graphical user interface on the touch screen, the graphical user interface being capable of simultaneous provision of a plurality of selectable icons or buttons representing respective functions of the mobile telecommunication terminal.

### Background

Mobile telecommunication terminals come in many different brands, shapes and types, for different mobile telecommunications system like GSM, UMTS, LTE, D-AMPS, CDMA2000, FOMA or TD-SCDMA. Often, the mobile telecommunication terminals are referred to as mobile telephones, or simply mobile phones.

Whereas in the early days of mobile telecommunications, the mobile terminals were used for speech communication only, the situation has of course changed dramatically since then. Nowadays, mobile terminals are also frequently used for professional, personal and recreational services in addition to telephone calls and thus contain a plurality of application programs such as calendar, messaging, word processing, www browsing, etc.

In recent years, to increase the versatility when using such additional services, mobile terminals have been developed which are based on touch-sensitive display screens, or simply touch screens. A touch screen-based mobile terminal is often referred to as a smartphone, or alternatively a personal digital assistant (PDA), and uses a graphical user interface (GUI) for essentially all interaction with the user. Thus, thanks to the touch screen's ability to act as not only a visual output device but also as an input device for receiving commands and data from the user, the mobile terminals of today are often no longer provided with a conventional mechanical keypad like an ITU-T or PIN-type telephone keypad, or a mechanical QWERTY keyboard. Rather, such keypads or keyboards are normally implemented as virtual keypads or keyboards shown on the touch screen. To many manufacturers, this is considered as beneficial, since it allows a cost-saving from eliminating a mechanical keypad/keyboard, and it also allows the presentation area of the touch screen to be maximized and constrained essentially only by the overall size of the smartphone housing.

To access the various functions provided by a smartphone, the graphical user interface is typically configured to present a plurality of selectable icons or buttons, which represent the respective functions of the smartphone, simultaneously on the touch screen. Typically, the selectable icons are presented in a two-dimensional configuration, either as a structured grid of icons, or as an unrestricted group of icons freely (re-)positionable on the touch screen by the user - much like the desktop surface of a personal computer GUI like Microsoft Windows or Apple OS X.

However, not all user categories are comfortable with the pure smartphone-design consisting solely of a GUI on a touch screen. For instance, users which frequently need to input large amounts of text, for instance for email or word processing purposes, sometimes prefer a separate keyboard for this purpose. For instance, the Sony (Ericsson) Xperia X10 Mini Pro is provided with a miniature QWERTY keyboard which is slideable from the main part of the apparatus housing. Other examples of known mobile terminal models have been provided with an extendible ITU-T type keypad for facilitating ordinary call handling and/or input of text by way of multi-tap typing. When such an additional keyboard or keypad is pulled out, the mobile terminal automatically detects this and typically adapts/changes the GUI to prepare the terminal for use with the keyboard/keypad. This may involve rotating the view on the touch screen from portrait to landscape, or entering into a call handling application, etc.

Some drawbacks with existing approaches have been identified by inventive considerations. One such identified drawback is that the known manner of presenting a large number of selectable icons in a two-dimensional configuration on the touch screen is confusing to some (e.g. inexperienced or handicapped) user categories.

Also, the touch screen-based smart-phone approach represents a paradigm shift into a brand new user interface technology where massive amounts of information is concurrently presented on the touch screen for intended direct actuation by the user's fingertips. Far from all user groups can be expected to follow this leap without difficulties, particularly if they have been using conventional keypad-based equipment for a long time.

Even in case the smart-phone is provided with an additional keyboard or keypad, remaining drawbacks have been identified. One such drawback is that the automatic adaptation of the GUI upon extension of an additional keyboard or keypad may be contra-productive for users which may then lose track of what is going on in their mobile terminal and, in particular, make it more difficult for such users to successfully manipulate the GUI to select the appropriate icons on the touch screen.

Another such drawback is that the presence of all the extra keys on the additional keyboard or keypad may cause uncertainty to the user as to whether and to what extent the keys on the additional keyboard or keypad can or may be used for manipulating the GUI by selecting the appropriate icons on the touch screen.

### Summary

It is accordingly an object of the invention to eliminate or alleviate at least some of the problems referred to above.

One aspect of the present invention is a mobile telecommunication terminal comprising: a two-part apparatus housing having a first housing part movably coupled to a second housing part, the first housing part comprising a touch screen and the second housing part comprising a keypad, the mobile telecommunication terminal being operable in a first mode where the first and second housing parts assumes a first position relative to each other, and in a second mode where the first and second housing parts assumes a second position relative to each other; and a controller configured to provide a graphical user interface on said touch screen, said graphical user interface being capable of simultaneous provision of a plurality of selectable icons or buttons representing respective functions of said mobile telecommunication terminal.

According to this aspect of the present invention, the plurality of selectable icons is provided as a linearly ordered list on said touch screen; the apparatus housing has a permanently accessible actuator set for linear navigation and selection in said linearly ordered list of selectable icons; and the graphical user interface is configured such that the icons of said linearly ordered list can be navigated and selected both using said touch screen and using said actuator set in said first mode as well as in said second mode.

Embodiments of the invention are defined by the appended dependent claims and are further explained in the detailed description section.

It should be emphasized that the term "comprises/comprising" when used in this specification is taken to specify the presence of stated features, integers, steps, or components, but does not preclude the presence or addition of one or more other features, integers, steps, components, or groups thereof. All terms used in the claims are to be interpreted according to their ordinary meaning in the technical field, unless explicitly defined otherwise herein. All references to "alan/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief Description of the Drawings

Objects, features and advantages of embodiments of the invention will appear from the following detailed description, reference being made to the accompanying drawings, in which:
Fig 1 is a schematic illustration of a non-limiting example of a telecommunication system in which embodiments of the present invention may be exercised;
Fig 2a is a perspective front view of a mobile telecommunication terminal according to one embodiment of the present invention, the mobile telecommunication terminal being shown in a first mode in which two movably coupled housing parts are in a first, closed position relative to each other;
Fig 2b is a perspective front view of the mobile telecommunication terminal of Fig 2a, here being shown in a second mode in which the two movably coupled housing parts are in a second, extended position relative to each other;
Fig 3 is a schematic block diagram illustrating the basic internal hardware and software layout of a mobile telecommunication terminal according to an embodiment of the present invention;
Fig 4 is a planar front view of the mobile telecommunication terminal of Figs 2a and 2b;
Fig 5a is a schematic planar front view of the mobile telecommunication terminal, illustrating a triple-parameter focus indication feature according to one embodiment of the present invention;
Fig 5b is a schematic planar front view of the mobile telecommunication terminal, illustrating a triple-parameter focus indication feature according to another embodiment of the present invention; and
Figs 5c-d are schematic planar front views of the mobile telecommunication terminal, illustrating an automatic scrolling icon refocus feature according to one embodiment of the present invention.

### Detailed Description

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

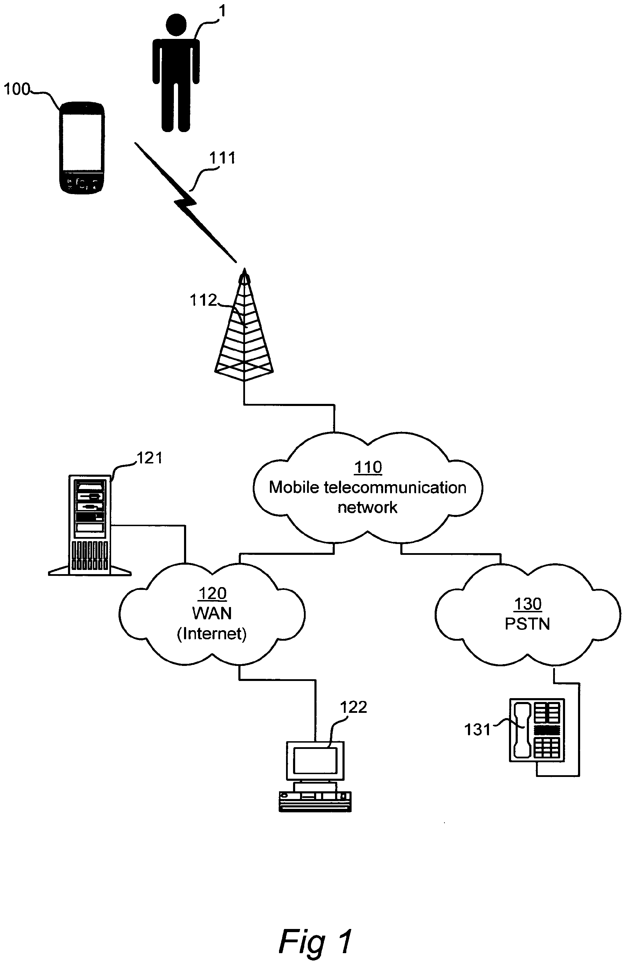

Before turning to a detailed description of the disclosed embodiments, an exemplifying environment in which they may be exercised will now be briefly described with reference to Fig 1.

In Fig 1, a mobile telecommunication terminal 100 is part of a cellular telecommunications system. A user 1 of the mobile telecommunication terminal 100 may use different telecommunications services, such as voice calls, Internet browsing, video calls, data calls, facsimile transmissions, still image transmissions, video transmissions, electronic messaging, and e-commerce. The invention is however not limited to any particular set of services.

The mobile telecommunication terminal 100 may connect to a mobile telecommunication network 110 over a radio link 111 and a base station 112. The mobile telecommunication terminal 100 and the mobile telecommunication network 110 may comply with any commercially available mobile telecommunication standard, for instance (without limitation) GSM, UMTS, LTE, D-AMPS, CDMA2000, FOMA and TD-SCDMA. Embodiments of the mobile telecommunication terminal 100 will be described in closer detail with reference to the following drawings.

A public switched telephone network (PSTN) 130 is connected to the mobile telecommunication network 110. Telephone terminals of PSTN subscribers may connect to the PSTN 130. In Fig 1, a stationary telephone 131 is indicated as a mere example of this.

The mobile telecommunication network 110 is operatively associated with a wide area data network 120, which may be the Internet or a part thereof. Server computers 121 and client computers 122 may be connected to the wide area data network 120 to allow communication with the mobile telecommunication terminal 100.

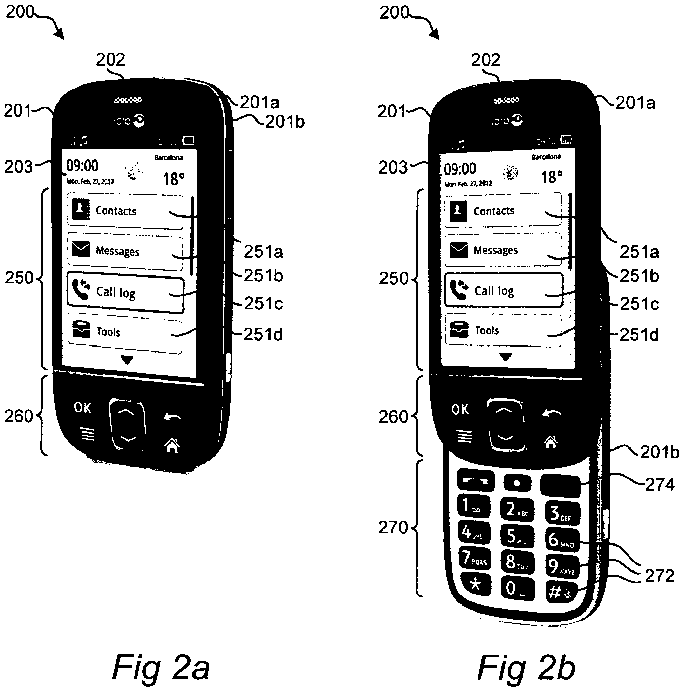

An embodiment 200 of the mobile telecommunication terminal 100 is illustrated in more detail in Figs 2a and 2b. The mobile telecommunication terminal 200 has a two-part apparatus housing 201 which consists of a first housing part 201a being movably coupled to a second housing part 201b to support sliding movement between the first and second housing parts 201a, 201b. The first housing part 201a comprises a touch screen 203 at its front side. Additionally at the front side of the first housing part 201a, there is provided a permanently accessible actuator set 260 adjacently to a lower edge of the touch screen 203. The details and functions of the actuator set 260 will be described in more detail later. The second housing part 201b comprises a keypad 270.

Hence, the mobile telecommunication terminal 200 is of a sliding type which is operable in a first mode where the first and second housing parts assumes a first, closed position relative to each other (see Fig 2a), and in a second mode where the first and second housing parts assumes a second, extended position relative to each other (see Fig 2b). In the disclosed embodiment, the keypad 270 on the second housing part 201b comprises an ITU-T type keypad, or PIN-type keypad, which has twelve physical (mechanical) keys representing digits "0" through "9" as well as signs "*" and "#".

In addition, the keypad 270 on the second housing part 201b comprises conventional call handling keys 274, such as physical (mechanical) off-hook and on-hook keys.

The keypad 270 is inaccessible for operation by a user 1 in the first mode where the first and second housing parts 201a, 201b assume the first, closed position relative to each other, as seen in Fig 2a. In contrast, the keypad 270 is accessible for operation by the user 1 in the second mode where the first and second housing parts 201a, 201b assume the second, extended position relative to each other, as seen in Fig 2b. Other kinds of keypads may be used for the keypad 270 in other embodiments.

In alternative embodiments, the mobile telecommunication terminal 200 may instead be of clamshell-type, swivel-type or generally any other type where the two housing parts 201a and 201b are movably coupled to each other.

The two-part apparatus housing 201 has a man-machine interface (MMI) which involves a loudspeaker 202, a microphone, the touch screen 203, the ITU-T-type keypad 270 and the actuator set 260.

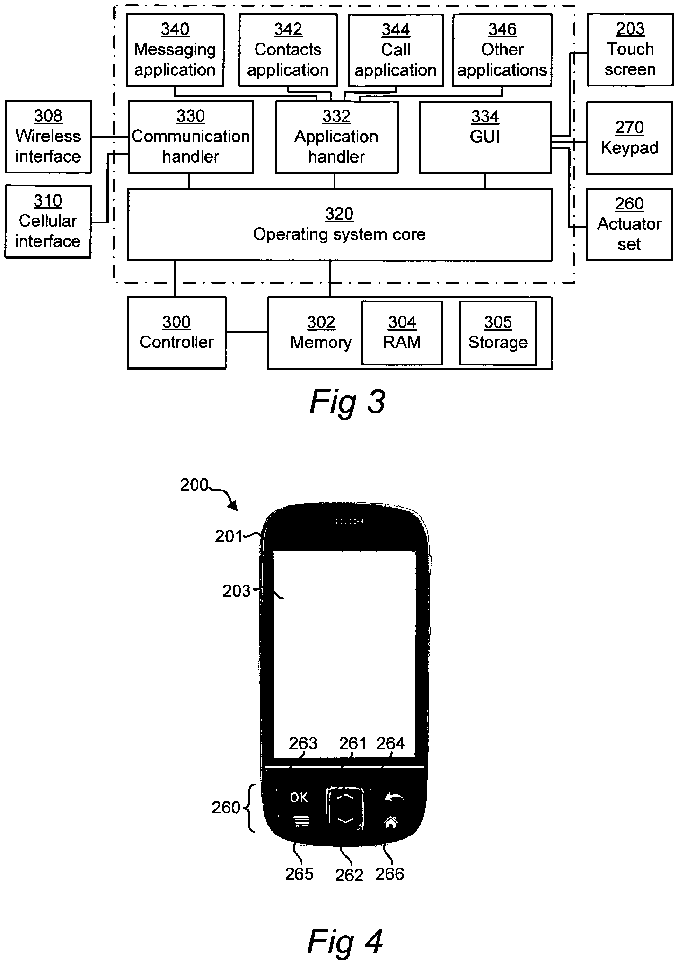

The internal software and hardware structure of the mobile terminal 200 according to an embodiment, which may or may not be the embodiment shown in Figs 2a and 2b, will now be described with reference to Fig 3. Software components are indicated within a dash-dotted frame, whereas hardware components are outside of this frame. The mobile terminal 200 has a controller 300 being responsible for general device operations. Any commercially available central processing unit (CPU) or digital signal processor (DSP), or other programmable electronic logic device such as an application-specific integrated circuit (ASIC) or field-programmable gate array (FPGA), may be used to implement the controller 300. The controller 300 has associated memory 302 which includes a work memory (RAM) 304 and a non-volatile storage memory 305, for instance in the form of EEPROM, flash memory (e.g. memory card), hard disk, or any combination thereof. The controller 300 uses the memory 302 for different purposes, for instance for storing file objects as well as data and program instructions for the software in the mobile terminal 200.

The software includes an operating system core 320 on a lower level, application programs 340-346 on an upper level for interaction with the user 1, and drivers and handlers for the hardware and the application programs on an intermediate level. The intermediate level includes a GUI 334 which forms a user interface towards the user 1 by means of the touch screen 203, keypad 270 and actuator set 260.

Other I/O devices may also be included in the mobile terminal 200, such as a microphone, the loudspeaker 202, a vibrator, a ringtone generator, one or mode LED status indicators, audio volume controls, etc.

An application handler 332 controls the application programs 340-346, which may include a messaging (e.g. SMS, MMS or email) application 340, a contacts application 342, a call handling application 344 for voice calls and/or video calls, as well as various other applications 346, such as applications for browsing (e.g. www, wap), calendar, file handling, a control panel or settings application, a camera application, one or more video games, a word processing application, a spreadsheet application, a drawing application, a slideshow presentation application, etc.

The software also includes various modules, protocol stacks, drivers, etc., which are commonly designated as communication handler 330 and which provide communication support for a cellular interface 310 and, optionally, a wireless interface for Bluetooth, WLAN, NFC or IrDA (commonly designated as 308 in Fig 3). The cellular interface 310 comprises an internal or external antenna as well as appropriate radio circuitry for establishing and maintaining a wireless link to a base station (e.g. the link 111 and base station 112 in Fig 1). The radio circuitry comprises a radio transmitter and receiver (transceiver; TX/RX), formed for instance by band pass filters, amplifiers, mixers, local oscillators, low pass filters, AD/DA converters, etc.

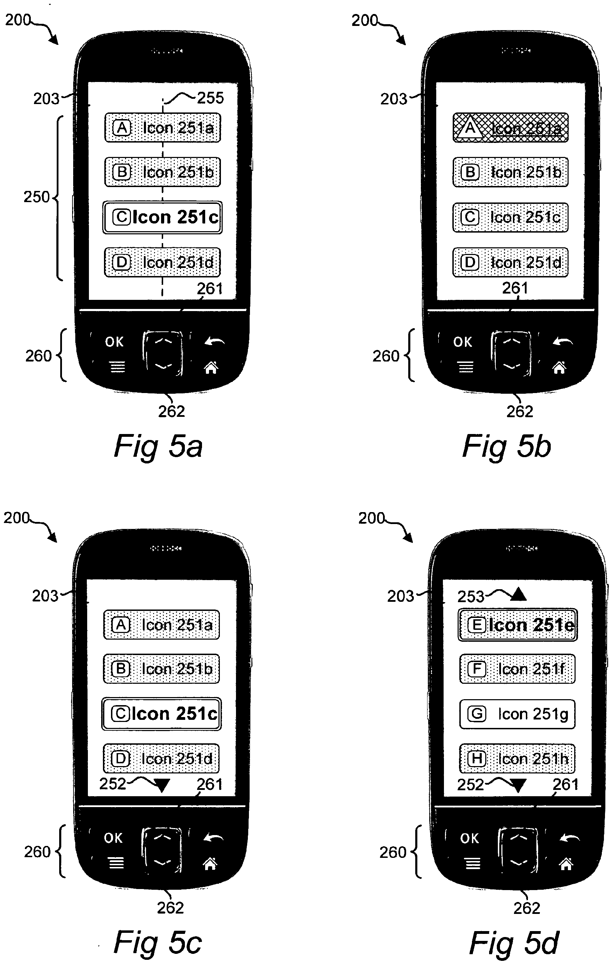

With reference to the remaining Figs 4 and 5a-d, an arrangement for providing a novel and inventive graphical user interface control in accordance with embodiments of the invention will now be described. As already mentioned, the controller 300 is configured to provide the graphical user interface 334 on the touch screen 203. As seen in Figs 5a-5d, the graphical user interface 334 is capable of simultaneous provision of a plurality of selectable icons 251a-251h or buttons representing respective functions of the mobile telecommunication terminal 300. Advantageously, the selectable icons 251a-251h will represent different ones of the application programs 340-346 as executable by the controller 300. However, the selectable icons 251a-251h may additionally or alternatively represent other selectable functions of the mobile telecommunication terminal 300, including but not limited to files or other data stored in the memory 302, or external resources 121, 122 accessible over the networks 110, 120.

Quite unlike prior art smartphone GUI:s, the plurality of selectable icons 251a-d is provided as a linearly ordered list 250 on the touch screen 203. The permanently accessible actuator set 260 is provided to allow the user 1 to perform linear navigation and selection in the linearly ordered list 250 of selectable icons. As seen in the Fig 4 embodiment, the permanently accessible actuator set 260 comprises first and second arrow keys 261, 262 for navigating up and down, respectively, in the linearly ordered list 250 of selectable icons. In the disclosed embodiment, the first and second arrow keys 261, 262 are designed to share a common cap, which is tiltable in two directions to cause actuation of the first or second arrow key 261 or 262 as desired. The permanently accessible actuator set 260 further comprises an accept or OK key 263, a back or cancel key 264, an assistance key 265 and a home key 266. In other embodiments, the permanently accessible actuator set 260 need not comprise all of these keys 261-266, and may comprise other keys than these.

The graphical user interface 334 is configured such that the icons of the linearly ordered list 250 can be navigated and selected, in the first mode as well as in the second mode, both by using the touch screen 203 and by using the actuator set 260.

Hence, drawbacks associated with prior art approaches are avoided, since the user 1 can use exactly the same approach for navigating and selecting in the linearly ordered list 250 of icons 251a-h, irrespective of whether the terminal 200 is in the first, closed mode (Fig 2a) or second, extended mode (Fig 2b).

Navigating and selecting by using the touch screen 203 may involve performing gestures like dragging and tapping with one or more fingers on the surface of the touch screen 203. Navigating and selecting by using the actuator set 260 may involve pressing the up arrow key 261 and down arrow key 263 as desired to scroll in the linearly ordered list 250 of selectable icons 251a-251h, followed by selecting the desired focused icon (for instance icon 251c in Fig 5a) by means of the accept (OK) key 263.

Advantageously, as seen in the disclosed embodiment, the first and second arrow keys are aligned with a longitudinal axis 255 of the screen surface of the touch screen 203. Likewise, the icons 251a-d of the linearly ordered list 250 are provided along the longitudinal axis 255 of the screen surface of the touch screen 203. This provides for a very accurate and intuitive navigation method also for user categories with no or limited previous experience from touch screen-based GUI:s. This advantage is emphasized by the fact that the selectable icons can only be navigated in one dimension (along the longitudinal axis 255) instead of two dimensions, as is commonplace in smartphone GUI:s.

To this end, it is preferred that the elements of the actuator set 260 which serve navigational purposes (arrow keys 261 and 262 in the disclosed embodiment) are limited to one-dimensional navigation. However, it is envisaged that other navigation elements, such as four-directional arrow keys or joysticks, may be used in alternative embodiments.

With reference to Figs 5a and 5b, a triple-parameter focus indication feature according to different embodiments of the present invention will now be described which gives superior guidance to inexperienced touch screen users, and/or visually impaired users.

The graphical user interface 334 is configured such that navigation of the linearly ordered list 250 using the actuator set 260 causes focus of one icon at a time. In Fig 5a, the icon 251c is focused. The graphical user interface 334 indicates the focused icon by concurrently changing more than two appearance parameters for the focused icon 251c compared to other icons 251a, 251b, 251d in the linearly ordered list 250. Hence, the focused icon may for instance be indicated by changing three appearance parameters selected from the group consisting of: a difference in background data (such as different background color or background pattern), a difference in foreground data (such as font or symbol size, font or symbol type, font or symbol color), a border around the focused icon, and an animation of the focused icon. More than one appearance parameter may be selected from the same category.

As seen in the embodiment illustrated in Fig 5a, the focused icon 251c is indicated by 1) a different - brighter - background color, 2) a different - larger - font size, and 3) a border around the focused icon.

On the other hand, as seen in the embodiment illustrated in Fig 5b, the focused icon 251a is indicated by 1) a different background pattern, 2) a different - underlined - font type, and 3) a different type for the symbol A (triangular instead of square).

With reference to Figs 5c-d, an automatic scrolling icon refocus feature according to one embodiment of the present invention will now be described, which gives superior guidance to inexperienced touch screen users, and/or visually impaired users.

The graphical user interface 334 is configured to allow scrolling of the linearly ordered list 250 of selectable icons 251a-251h by way of a gesture, such as a sweeping touch by the user's finger, applied onto the touch screen 203. This allows presentation of different parts of the linearly ordered list 250 on the touch screen. Small visual markers 252, 253 may assist the user 1 by indicating that there are more contents, i.e. more icons, available than is currently seen on the touch screen 203.

The graphical user interface 334 is configured to automatically switch focus from one icon (251c in Fig 5c) which was focused in the presented part (251a-d) of the linearly ordered list immediately prior to the user's application of the gesture, to another icon (251e in Fig 5d) in the linearly ordered list. As seen in Fig 5c, the aforesaid another icon 251e was not in the then-presented part 251a-d of the linearly ordered list immediately before the gesture was made by the user. As seen in Fig 5d, the aforesaid another icon is shown as focused at the top of the now-presented part 251e-251h of the linearly ordered list on the touch screen 203 after the user's application of the gesture.

The automatic scrolling icon refocus feature described with reference to Figs 5c-d may advantageously be combined with the triple-parameter focus indication feature described with reference to Figs 5a-b.

The invention has been described above in detail with reference to embodiments thereof. However, as is readily understood by those skilled in the art, other embodiments are equally possible within the scope of the present invention, as defined by the appended claims.

## Claims

1. A mobile telecommunication terminal (200) comprising:
a two-part apparatus housing (201) having a first housing part (201a) movably coupled to a second housing part (201b), the first housing part comprising a touch screen (203) and the second housing part comprising a keypad (270), the mobile telecommunication terminal being operable in a first mode where the first and second housing parts assume a first position relative to each other, and in a second mode where the first and second housing parts assume a second position relative to each other; and
a controller (300) configured to provide a graphical user interface (334) on said touch screen, said graphical user interface being capable of simultaneous provision of a plurality of selectable icons or buttons representing respective functions of said mobile telecommunication terminal; **characterized in that**
the plurality of selectable icons (251a-d) is provided as a linearly ordered list (250) on said touch screen (203);
the apparatus housing (201) has a permanently accessible actuator set (260) for linear navigation and selection in said linearly ordered list (250) of selectable icons; and
the graphical user interface is configured such that the icons of said linearly ordered list (250) can be navigated and selected both by using said touch screen (203) and by using said actuator set (260) in said first mode as well as in said second mode.

2. The mobile telecommunication terminal (200) as defined in claim 1, wherein the graphical user interface is configured such that navigation of said linearly ordered list (250) using said actuator set (260) causes focus of one icon (251c) at a time, said graphical user interface being capable of indicating the focused icon by concurrently changing more than two appearance parameters for the focused icon compared to other icons (251a, 251b, 251 d) in said linearly ordered list (250).

3. The mobile telecommunication terminal (200) as defined in claim 2, wherein the focused icon (251c; 251a) is indicated by changing three appearance parameters selected from the group consisting of:
a difference in background data, such as different background color or background pattern,
a difference in foreground data, such as different font or symbol size, font or symbol type, font or symbol color,
a border around said focused icon, and
an animation of said focused icon.

4. The mobile telecommunication terminal (200) as defined in any preceding claim, the graphical user interface being configured to allow scrolling of said linearly ordered list (250) of selectable icons by way of a gesture applied onto said touch screen (203) to allow presentation of different parts of the linearly ordered list (250) on said touch screen, wherein the graphical user interface is configured to automatically switch focus from one icon (251c) which was focused in the presented part (251a-d) of the linearly ordered list immediately prior to application of said gesture, to another icon (251 e) in the linearly ordered list, wherein said another icon was not in the then-presented part of the linearly ordered list immediately prior to application of said gesture and wherein said another icon is shown as focused at the top of the now-presented part (251e-251h) of the linearly ordered list on the touch screen after application of said gesture.

5. The mobile telecommunication terminal (200) as defined in any preceding claim, wherein the icons of said linearly ordered list (250) are provided along a longitudinal axis (255) of a screen surface of said touch screen (203).

6. The mobile telecommunication terminal (200) as defined in any preceding claim, wherein the permanently accessible actuator set (260) comprises first and second arrow keys for navigating up and down, respectively, in said linearly ordered list (250) of selectable icons.

7. The mobile telecommunication terminal (200) as defined in claim 5 and 6, wherein the first and second arrow keys are aligned with the longitudinal axis (255) of the screen surface of said touch screen (203).

8. The mobile telecommunication terminal (200) as defined in claim 6 or 7, wherein the permanently accessible actuator set (260) further comprises an accept or OK key (263) and a back or cancel key (264).

9. The mobile telecommunication terminal (200) as defined in any of claims 6-8, the first housing part (201a) having a front side, the touch screen (203) being provided at said front side, wherein the permanently accessible actuator set (260) is located at said front side adjacently to an edge of said touch screen (203).

10. The mobile telecommunication terminal (200) as defined in any preceding claim, wherein the keypad (270) on said second housing part (201b) comprises an ITU-T type keypad.

11. The mobile telecommunication terminal (200) as defined in any preceding claim, wherein said keypad (270) is inaccessible for operation by a user (1) in the first mode where the first and second housing parts (201a, 201b) assumes the first position relative to each other, but is accessible for operation by the user in the second mode where the first and second housing parts assumes the second position relative to each other.

12. The mobile telecommunication terminal (200) as defined in claim 11, wherein the first and second housing parts (201a, 201b) are movably coupled to support sliding movement between the first and second housing parts (201a, 201b).

13. The mobile telecommunication terminal (200) as defined in any preceding claim, wherein the icons (251a-251h) in said linearly ordered list (250) of selectable icons represents different application programs (340-346) executable by said controller (300).

## Amended claims

### Amended claims in accordance with Rule 137(2) EPC.

**1.** A mobile telecommunication terminal (200) comprising:
a two-part apparatus housing (201) having a first housing part (201a) movably coupled to a second housing part (201b), the first housing part comprising a touch screen (203) and the second housing part comprising a keypad (270), the mobile telecommunication terminal being operable in a first mode where the first and second housing parts assume a first position relative to each other, and in a second mode where the first and second housing parts assume a second position relative to each other; and
a controller (300) configured to provide a graphical user interface (334) on said touch screen, said graphical user interface being capable of simultaneous provision of a plurality of selectable icons or buttons representing respective functions of said mobile telecommunication terminal; **characterized in that**
the plurality of selectable icons (251a-d) is provided as a linearly ordered list (250) on said touch screen (203);
the apparatus housing (201) has a permanently accessible actuator set (260) for linear navigation and selection in said linearly ordered list (250) of selectable icons; and
the graphical user interface is configured such that the icons of said linearly ordered list (250) can be navigated and selected both by using said touch screen (203) and by using said actuator set (260) in said first mode as well as in said second mode,
wherein the graphical user interface is substantially the same irrespective of which of the first and the second mode the mobile communication terminal is operating in, and
wherein said linearly ordered list consists of said icons.

**2.** The mobile telecommunication terminal (200) as defined in claim 1, wherein the graphical user interface is configured such that navigation of said linearly ordered list (250) using said actuator set (260) causes focus of one icon (251c) at a time, said graphical user interface being capable of indicating the focused icon by concurrently changing more than two appearance parameters for the focused icon compared to other icons (251a, 251b, 251d) in said linearly ordered list (250).

**3.** The mobile telecommunication terminal (200) as defined in claim 2, wherein the focused icon (251c; 251a) is indicated by changing three appearance parameters selected from the group consisting of:
a difference in background data, such as different background color or background pattern,
a difference in foreground data, such as different font or symbol size, font or symbol type, font or symbol color,
a border around said focused icon, and
an animation of said focused icon.

**4.** The mobile telecommunication terminal (200) as defined in any preceding claim, the graphical user interface being configured to allow scrolling of said linearly ordered list (250) of selectable icons by way of a gesture applied onto said touch screen (203) to allow presentation of different parts of the linearly ordered list (250) on said touch screen, wherein the graphical user interface is configured to automatically switch focus from one icon (251c) which was focused in the presented part (251a-d) of the linearly ordered list immediately prior to application of said gesture, to another icon (251e) in the linearly ordered list, wherein said another icon was not in the then-presented part of the linearly ordered list immediately prior to application of said gesture and wherein said another icon is shown as focused at the top of the now-presented part (251e-251h) of the linearly ordered list on the touch screen after application of said gesture.

**5.** The mobile telecommunication terminal (200) as defined in any preceding claim, wherein the icons of said linearly ordered list (250) are provided along a longitudinal axis (255) of a screen surface of said touch screen (203).

**6.** The mobile telecommunication terminal (200) as defined in any preceding claim, wherein the permanently accessible actuator set (260) comprises first and second arrow keys for navigating up and down, respectively, in said linearly ordered list (250) of selectable icons.

**7.** The mobile telecommunication terminal (200) as defined in claim 5 and 6, wherein the first and second arrow keys are aligned with the longitudinal axis (255) of the screen surface of said touch screen (203).

**8.** The mobile telecommunication terminal (200) as defined in claim 6 or 7,
wherein the permanently accessible actuator set (260) further comprises an accept or OK key (263) and a back or cancel key (264).

**9.** The mobile telecommunication terminal (200) as defined in any of claims 6-8, the first housing part (201a) having a front side, the touch screen (203) being provided at said front side, wherein the permanently accessible actuator set (260) is located at said front side adjacently to an edge of said touch screen (203).

**10.** The mobile telecommunication terminal (200) as defined in any preceding claim, wherein the keypad (270) on said second housing part (201b) comprises an ITU-T type keypad.

**11.** The mobile telecommunication terminal (200) as defined in any preceding claim, wherein said keypad (270) is inaccessible for operation by a user (1) in the first mode where the first and second housing parts (201a, 201b) assumes the first position relative to each other, but is accessible for operation by the user in the second mode where the first and second housing parts assumes the second position relative to each other.

**12.** The mobile telecommunication terminal (200) as defined in claim 11,
wherein the first and second housing parts (201a, 201b) are movably coupled to support sliding movement between the first and second housing parts (201a, 201b).

**13.** The mobile telecommunication terminal (200) as defined in any preceding claim, wherein the icons (251a-251h) in said linearly ordered list (250) of selectable icons represents different application programs (340-346) executable by said controller (300).
